# EUROPEAN PATENT APPLICATION

(11) **EP 4 693 177 A1**
(43) Date of publication of application: **11.02.2026**
(21) Application number: 24780354.7
(22) Date of filing: 26.03.2024
(51) Int. Cl.: G06T 7/00, G06T 7/11, G06V 10/82

(54) **IMAGE PROCESSING DEVICE, IMAGE PROCESSING METHOD, AND PROGRAM**

(30) Priority: 27.03.2023 JP 2023050607
(71) Applicant: Resonac Corporation, Tokyo 105-7325 (JP)
(72) Inventor: MATSUI, Akira, Tokyo 105-7325 (JP); OTAKE, Hiromi, Tokyo 105-7325 (JP); IKADAI, Hiroto, Tokyo 105-7325 (JP); OKANO, Yu, Tokyo 105-7325 (JP); SHIMIZU, Yohei, Tokyo 105-7325 (JP); TAKEMOTO, Shimpei, Tokyo 105-7325 (JP)
(74) Representative: Strehl & Partner mbB
(86) International application number: PCT/JP2024/012035
(87) International publication number: WO 2024/204246

(57) **Abstract**

An image processing device includes an image acquisition part configured to acquire a target image in which fibers are captured, a first segmentation part configured to generate an individual-object segmentation result detecting each of the fibers included in the target image using a trained individual-object segmentation mode, a second segmentation part configured to generate a category segmentation result recognizing regions where the fibers are captured in the target image using a trained category segmentation model, a region correction part configured to correct the individual-object segmentation result with the category segmentation result, and a result output part configured to output a correction result of the individual-object segmentation result.

## Description

### TECHNICAL FIELD

The present invention relates to image processing devices, image processing methods, and programs.

### BACKGROUND ART

A technology of performing segmentation of an image using a machine learning model has been known. In segmentation of an image, a result of the segmentation may be corrected to improve accuracy.

For example, a metallographic structure segmentation method using a trained machine learning model is disclosed in Patent Document 1. In the segmentation method disclosed in Patent Document 1, a correction for bringing a result closer to an accurate segmentation result is determined based on a result of segmentation performed on a selected image, and the correction is applied to a segmentation result of an image from which the selected image is removed.

### RELATED ART DOCUMENTS

### PATENT DOCUMENTS

Patent Document 1: Japanese Laid-Open Patent Publication No. 2022-188504

### DISCLOSURE OF THE INVENTION

### PROBLEMS TO BE SOLVED BY THE INVENTION

However, the technology of the related art has a problem such that accuracy is low when each fiber is detected from an image capturing multiple fibers. In the case where a region where fibers are entangled is included, the fibers entangled with one another cannot be accurately identified. In the case where a region where fibers are overlapped is included, the fibers overlapping one another are similarly not accurately identified. In addition, if there is line-shaped dirt or the like in a background, the line-shaped dirt or the like may be erroneously detected as a fiber.

One aspect of the present disclosure aims to accurately recognize fibers included in an image.

### MEANS FOR SOLVING THE PROBLEMS

The present disclosure includes the following configurations.
[1] An image processing device includes: an image acquisition part configured to acquire a target image in which fibers are captured; a first segmentation part configured to generate an individual-object segmentation result in which each of the fibers included in the target image is detected using a trained individual-object segmentation model; a second segmentation part configured to generate a category segmentation result in which regions where the fibers are captured are recognized in the target image using a trained category segmentation model; a region correction part configured to correct the individual-object segmentation result with the category segmentation result; and a result output part configured to output a correction result of the individual-object segmentation result.
[2] The image processing device described in [1] above, in which the region correction part is configured to calculate a logical conjunction of the individual-object segmentation result and the category segmentation result to generate the correction result.
[3] The image processing device described in [1] above, in which the region correction part is configured to select the individual-object segmentation result or the category segmentation result for each unit of the target image based on a result of a comparison between a score of the individual-object segmentation result and a score of the category segmentation result to generate the correction result.
[4] The image processing device described in any one of [1] to [3] above, in which the individual-object segmentation model is a model of performing instance segmentation, and the category segmentation model is a model of performing semantic segmentation.
[5] The image processing device described in [4] above, in which the individual-object segmentation model is Mask R-CNN or YOLACT.
[6] The image processing device described in [4] or [5] above, in which the individual-object segmentation model allows a size of a bounding box to be adjustable.
[7] The image processing device described in any one of [4] to [6] above, in which the individual-object segmentation model allows a size of a mask of each individual object to be adjustable.
[8] The image processing device described in any one of [4] to [7] above, in which the category segmentation model is DeepLab or U-Net.
[9] The image processing device described in any one of [1] to [8] above, in which the region correction part is configured to correct regions where the fibers are detected in the individual-object segmentation result.
[10] The image processing device described in [9] above, in which the region correction part is configured to expand a region segmented per individual object through dilation or smoothing.
[11] An image processing method contains causing a computer to perform: a process of acquiring a target image in which fibers are captured; a process of generating an individual-object segmentation result in which each of the fibers included in the target image is detected using a trained individual-object segmentation model; a process of generating a category segmentation result in which regions where the fibers are captured are recognized in the target image using a trained category segmentation model; a process of correcting the individual-object segmentation result with the category segmentation result; and a process of outputting a correction result of the individual-object segmentation result.
[12] A program for causing a computer to perform: a process of acquiring a target image in which fibers are captured; a process of generating an individual-object segmentation result in which each of the fibers included in the target image is detected using a trained individual-object segmentation model; a process of generating a category segmentation result in which regions where the fibers are captured are recognized in the target image using a trained category segmentation model; a process of correcting the individual-object segmentation result with the category segmentation result; and a process of outputting a correction result of the individual-object segmentation result.

### EFFECTS OF THE INVENTION

According to one aspect of the present disclosure, fibers included in an image can be accurately recognized.

### BRIEF DESCRIPTION OF THE DRAWINGS

[Fig. 1] Fig. 1 is a view illustrating one example of a target image.
[Fig. 2] Fig. 2 is a view illustrating one example of a detection result of the related art.
[Fig. 3] Fig. 3 is a block diagram illustrating one example of an overall configuration of an object detection system.
[Fig. 4] Fig. 4 is a block diagram illustrating one example of a hardware configuration of a computer.
[Fig. 5] Fig. 5 is a block diagram illustrating one example of a functional configuration of the object detection system.
[Fig. 6] Fig. 6 is a flowchart illustrating one example of a process flow of an object detection method.
[Fig. 7] Fig. 7 is a view illustrating one example of a mask score before dilation.
[Fig. 8] Fig. 8 is a view illustrating one example of a mask score after binarization.
[Fig. 9] Fig. 9 is a view illustrating one example of a mask score after dilation.
[Fig. 10] Fig. 10 is a view illustrating one example of a mask score after correction.
[Fig. 11] Fig. 11 is a view illustrating one example of a detection result in one embodiment.
[Fig. 12] Fig. 12 is a view illustrating one example of an analysis screen.
[Fig. 13] Fig. 13 is a view illustrating one example of an image-check screen.
[Fig. 14] Fig. 14 is a view illustrating one example of a first result-check screen.
[Fig. 15] Fig. 15 is a view illustrating one example of the first result-check screen.
[Fig. 16] Fig. 16 is a view illustrating one example of a second result-check screen.
[Fig. 17] Fig. 17 is a view illustrating one example of the second result-check screen.
[Fig. 18] Fig. 18 is a view illustrating one example of a correction-result-check screen.
[Fig. 19] Fig. 19 is a view illustrating one example of a target image.
[Fig. 20] Fig. 20 is a view illustrating one example of a segmentation result by U-Net.
[Fig. 21] Fig. 21 is a view illustrating one example of a segmentation result by DeepLab.

### MODE OF CARRYING OUT THE INVENTION

Each embodiment of the present disclosure will be described with reference to accompanying drawings. In the specification and the drawings, constituent elements having substantially the same functional configuration are denoted by the same reference numerals, and redundant description thereof will be omitted.

### [Embodiments]

One embodiment of the present disclosure is directed to an object detection system that detects objects in an image capturing the objects. Hereinafter, an image that is a target of object detection may be also referred to as a "target image." In the present embodiment, the target image is an image capturing a state in which a large number of fibers are dispersed on a surface of an observation sample, and fibers entangled with one another or fibers overlapping one another are included. One example of the fibers of the present embodiment is carbon fibers. However, the fibers as a detection target are not limited as carbon fibers, and may be fibers of any material.

For a task of detecting objects included in an image, segmentation may be performed using a machine learning model. The segmentation using the machine learning model includes instance segmentation, semantic segmentation, and the like, based on deep learning.

The instance segmentation is a task of detecting individual objects included in an image. In the instance segmentation, a rectangular region (bounding box) in which each object is captured may be individually detected in an image, or individual objects may be detected and determined at a pixel level. An object detection result of the instance segmentation may include information indicating, for each of the detected objects, two-dimensional data (mask score) indicating a region in which each object is captured, a score indicating objectness, a mask obtained by binarizing the mask score using a threshold, and information indicating a bounding box. A size of a bounding box may be adjustable. A size of a mask of each individual object may be adjustable by setting a score threshold. A region of each individual object can be set to be large by setting a large size of the bounding box or a low score threshold. Moreover, the object detection result can also include reliability of the object detection result.

The machine learning model that performs the instance segmentation is one example of the "individual-object segmentation model." The mask scores included in the object detection result of the instance segmentation is one example of the "individual-object segmentation result."

As the machine learning model that performs the instance segmentation, mask region-based convolutional neural networks (Mask R-CNN), You Only Look At CoefficienTs (YOLACT), or the like can be used. The details of Mask R-CNN are disclosed in Reference Document 1.

[Reference Document 1] Kaiming He, Georgia Gkioxari, Piotr Dollar, Ross Girshick, "Mask R-CNN", Proceedings of the IEEE International Conference on Computer Vision (ICCV), 2017.

The semantic segmentation is a task of segmenting a subject constituting an image into one or more categories (classes). In the semantic segmentation, a label indicating a class (class label) is predicted for each unit (e.g., each pixel) of an image. The segmentation result obtained by the semantic segmentation may include two-dimensional data (semantic score) including a class label corresponding to each pixel of the image. Moreover, the segmentation result can include reliability of the segmentation result.

The machine learning model of performing the semantic segmentation is one example of the "category segmentation model." Moreover, the semantic score included in the segmentation result obtained by the semantic segmentation is one example of the "category segmentation result."

As the machine learning model of performing the semantic segmentation, U-Net, DeepLab, or the like can be used. The details of U-Net are disclosed in Reference Document 2. The details of DeepLab (DeepLab v3) are disclosed in Reference Document 3.

[Reference Document 2] Olaf Ronneberger, Philipp Fischer, and Thomas Brox, "U-Net: Convolutional Networks for Biomedical Image Segmentation", Medical Image Computing and Computer-Assisted Intervention (MICCAI), 2015.

[Reference Document 3] L. C. Chen, G. Papandreou, F. Schroff, and H. Adam, "Rethinking Atrous Convolution for Semantic Image Segmentation", European Conference on Computer Vision (ECCV), 2017.

When instance segmentation is performed on an image capturing a state in which a large number of fibers are dispersed on a sample surface, detection accuracy may become low. If fibers entangled with one another are included in the image, for example, each of the fibers may not be accurately detected. If line-shaped dirt, a streak, or the like is included in the background of the image, for example, the dirt or the like may be erroneously recognized as a fiber.

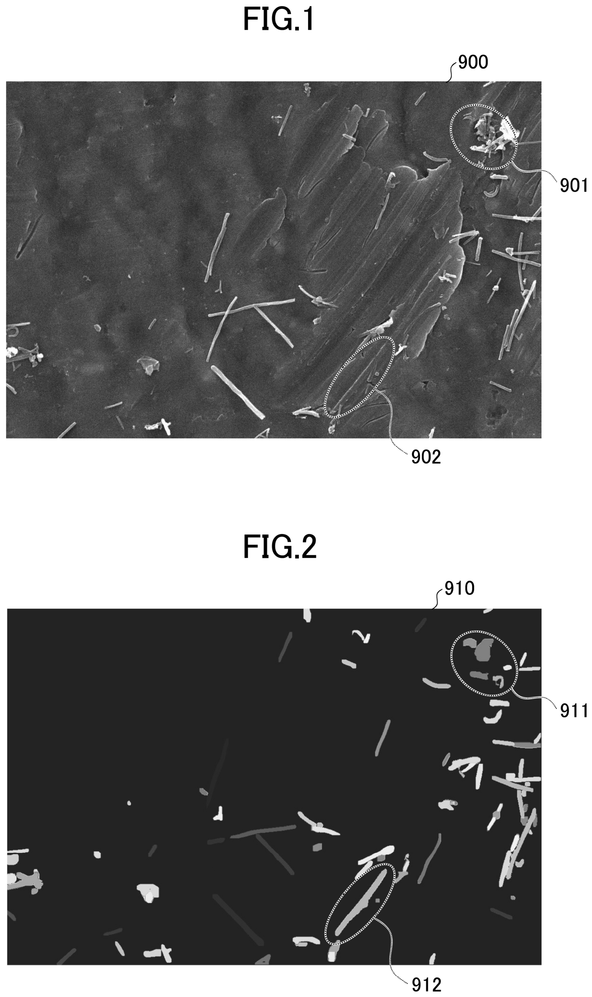

Fig. 1 is a view illustrating one example of a target image of the present embodiment. As presented in Fig. 1, a target image 900 of the present embodiment is an image capturing a state in which a large number of fibers are dispersed on a metal surface. Fibers 901 entangled with one another and a streak 902 are captured in the target image 900.

Fig. 2 is a view illustrating one example of an object detection result of the related art. Fig. 2 illustrates a result where fibers are detected in the target image of Fig. 1 using Mask R-CNN. The object detection result illustrated in Fig. 2 expresses the difference in the objects with the difference in color. As illustrated in Fig. 2, the region 911 in which the fibers are entangled with one another is detected as separated fibers in the object detection result 910 of the related art. Moreover, the region 912 in which the streak that is not a fiber is captured is detected as a fiber.

The object detection system 1 of the present disclosure aims to accurately recognize fibers included in an image. In particular, the object detection system 1 of the present disclosure accurately detects each of fibers entangled with one another or each of fibers overlapping one another. Moreover, the object detection system 1 of the present disclosure reduces erroneous recognition of line-shaped dirt, a streak, or the like in the background.

### <Overall configuration of object detection system>

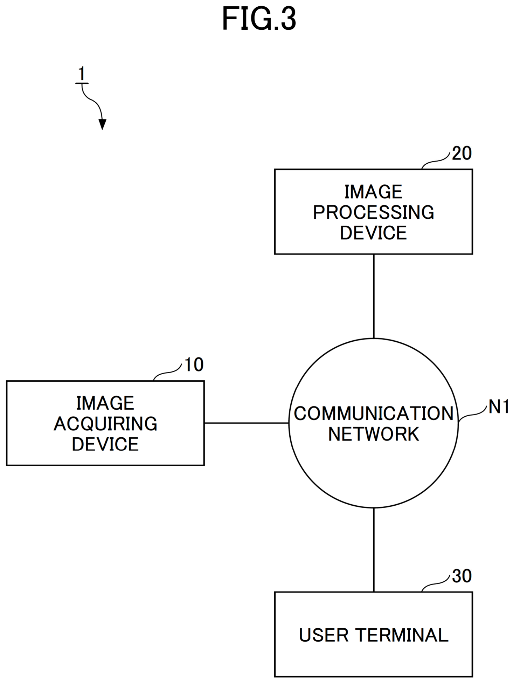

An overall configuration of the object detection system of the present embodiment will be described with reference to Fig. 3. Fig. 3 is a block diagram illustrating one example of the overall configuration of the object detection system of the present embodiment.

As illustrated in Fig. 3, the object detection system 1 of the present embodiment includes an image acquiring device 10, an image processing device 20, and a user terminal 30. The image acquiring device 10, the image processing device 20, and the user terminal 30 are coupled to one another via a communication network N1, such as a local area network (LAN), internet, or the like so that data can be transmitted between the image acquiring device 10, the image processing device 20, and the user terminal 30.

The image acquiring device 10 is an optical device that acquires a target image that is a target of object detection. The image acquiring device 10 may be a digital camera capturing static images, or a video camera capturing videos. As the image acquiring device 10, an optical microscope, a scanning electron microscope (SEM), a transmission electron electroscope (TEM), or the like can be used according to a size of an object that is a detection target. Moreover, the image acquiring device 10 may be an information processing device, such as a personal computer or the like, coupled to a camera of various kinds, or an inspection device in which a camera of various kinds is mounted.

The image processing device 20 is an image processing device, such as a personal computer, a workstation, a server, or the like, that generates an output image indicating a result of detecting objects in the target image acquired by the image acquiring device 10. The image processing device 20 receives the target image from the user terminal 30. The image processing device 20 detects objects in the acquired target image and transmits the output image indicating the detection result to the user terminal 30.

The user terminal 30 is an information processing terminal operated by a user, such as a personal computer, a tablet terminal, a smartphone, or the like. In response to an operation of a user, the user terminal 30 acquires the target image from the image acquiring device 10 and transmits the acquired image to the image processing device 20. The user terminal 30 receives the output image indicating the detection result from the image processing device 20, and outputs the output image to a user.

Note that the overall configuration of the object detection system 1 illustrated in Fig. 3 is one example, and various system configuration examples can be taken according to the intended use or purpose. For example, multiple image acquiring devices 10, image processing devices 20, multiple user terminals 30, or any combination of the foregoing may be included in the object detection system 1. For example, the image processing device 20 may be implemented by multiple computers, or may be implemented through a cloud computing service. The classification of devices illustrated in Fig. 3, such as the image acquiring device 10, the image processing device 20, and the user terminal 30, is one example.

### <Hardware configuration of object detection system>

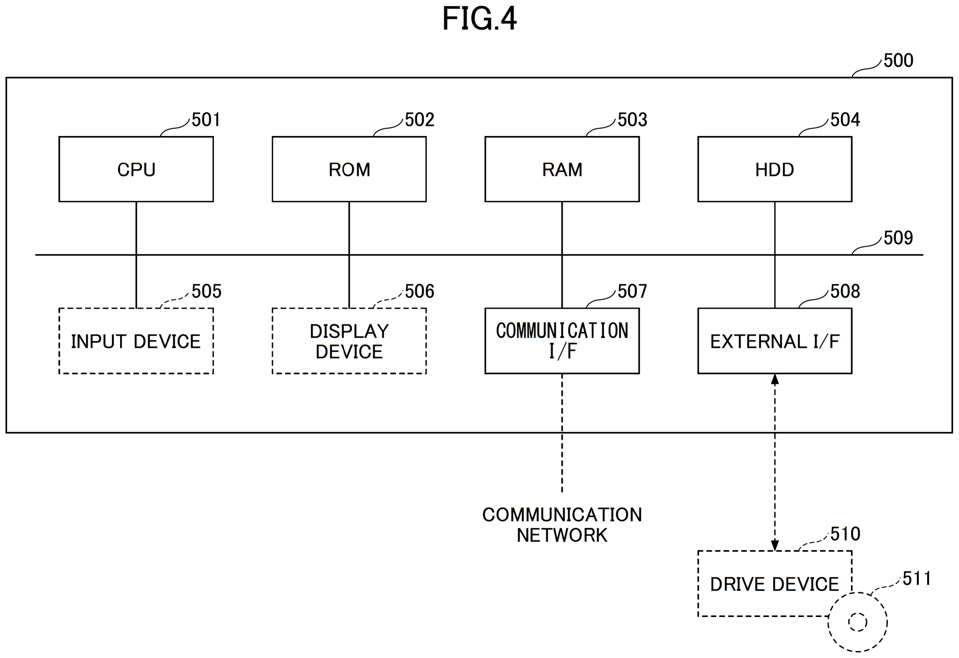

A hardware configuration of the object detection system 1 of the present embodiment will be described with reference to Fig. 4.

### <<Hardware configuration of computer>>

The image acquiring device 10, the image processing device 20, and the user terminal 30 in the present embodiment can be implemented, for example, by a computer. Fig. 4 is a block diagram illustrating one example of a hardware configuration of the computer 500 of the present embodiment.

As illustrated in Fig. 4, the computer 500 includes a central processing unit (CPU) 501, a read only memory (ROM) 502, a random access memory (RAM) 503, a hard disk drive (HDD) 504, an input device 505, a display device 506, a communication interface (I/F) 507, and an external I/F 508. The CPU 501, the ROM 502, and the RAM 503 constitute what is called a computer. The hardware components of the computer 500 are coupled to one another via a bus line 509. Note that the input device 505 and the display device 506 may be configured to be used by coupling to the external I/F 508.

The CPU 501 is an arithmetic device that reads one or more programs or data from a storage device, such as the ROM 502, the HDD 504, or the like, and loads the read one or more programs or data into a RAM 503 to execute processing, thereby implementing control of the entire computer 500 or functions of the computer 500.

The ROM 502 is one example of a non-volatile semiconductor memory (storage device) that can retain one or more programs or data even when a power source is turned off. The ROM 502 functions as a main storage device for storing various programs, data, or the like that are necessary for the CPU 501 to execute various programs installed in the HDD 504. Specifically, boot programs to be executed at the time of starting the computer 500, such as a basic input/output system (BIOS), an extensible firmware interface (EFI), and the like, and data for setting an operating system (OS), setting a network, and the like are stored in the ROM 502.

The RAM 503 is one example of a volatile semiconductor memory (storage device) from which programs and data are erased when the power source is turned off. For example, the RAM 503 is a dynamic random access memory (DRAM), a static random access memory (SRAM), or the like. The RAM 503 provides a work area to which various programs installed in the HDD 504 are loaded and then executed by the CPU 501.

The HDD 504 is one example of a non-volatile storage device in which programs, data, and the like are stored. The programs and data stored in the HDD 504 include OS, which is basic software for controlling the entire computer 500, applications for providing various functions on the OS, and the like. The computer 500 may utilize a storage device (e.g., a solid state drive (SSD) and the like) using a flash memory as a storage medium, instead of the HDD 504.

The input device 505 is a touch panel, operation keys, buttons, a keyboard, or a mouse used by a user to input various signals, or a microphone or the like for inputting audio data, such as voice.

The display device 506 is constituted by a display of liquid crystals, organic electro-luminescence (organic EL), or the like for displaying a screen, a speaker for outputting audio data, such as voice, and the like.

The communication I/F 507 is an interface coupled to a communication network to allow the computer 500 to perform data transmission.

The external I/F 508 is an interface with one or more external devices. Examples of the external device include a drive device 510 and the like.

The drive device 510 is a device for setting a recording medium 511. The recording medium 511 includes a medium on which information is optically, electrically, or magnetically recorded, such as a CD-ROM, a flexible disk, a magneto-optical disk, or the like. In addition, the recording medium 511 may include a semiconductor memory or the like on which information is electrically recorded, such as a ROM, a flash memory, or the like. The drive device 510 allows the computer 500 to read, write, or read and write the recording medium 511 via the external I/F 508.

The various programs to be installed in the HDD 504 are installed, for example, by setting a distributed recording medium 511 in the drive device 510 coupled to the external I/F 508, and reading the various programs recorded on the recording medium 511 with the drive device 510. Alternatively, the various programs to be installed in the HDD 504 may be installed by downloading the various programs through a network, which is different from the communication network, via the communication I/F 507.

### <Functional configuration of object detection system>

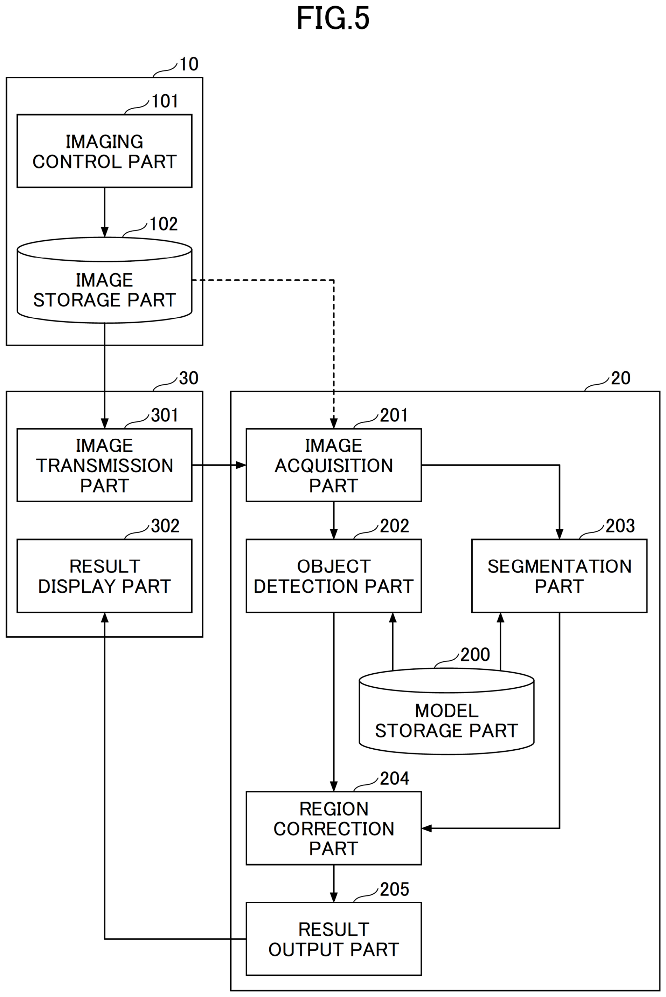

A functional configuration of the object detection system of the present embodiment will be described with reference to Fig. 5. Fig. 5 is a block diagram illustrating one example of the functional configuration of the object detection system 1 of the present embodiment.

### <<Functional configuration of image acquiring device>>

As illustrated in Fig. 5, the image acquiring device 10 of the present embodiment includes an imaging control part 101 and an image storage part 102.

The imaging control part 101 is implemented by a camera coupled to the external I/F 508 illustrated in Fig. 4. The image storage part 102 is implemented by the HDD 504 illustrated in Fig. 4.

The imaging control part 101 adjusts imaging conditions (an angle of view, imaging magnification, etc.) of the camera so that multiple fibers can be captured, thereby capturing a target image. The imaging control part 101 may capture a target image in response to an operation of a user, or may capture a target image when a predetermined condition is met. The predetermined condition is, for example, when a detection target is transported to a predetermined position of a detection device, or the like. The imaging control part 101 may capture a static image, or may capture a video and extract an image, in which multiple fibers are captured, from the video.

The image storage part 102 stores the target image captured by the imaging control part 101. The image storage part 102 may store information regarding the target image in association with the target image. The information regarding the target image includes, for example, an imaging date and time, information indicating an imaging target, imaging conditions, and the like.

### <<Functional configuration of image processing device>>

As illustrated in Fig. 5, the image processing device 20 of the present embodiment includes a model storage part 200, an image acquisition part 201, an object detection part 202 (one example of the first segmentation part), a segmentation part 203 (one example of the second segmentation part), a region correction part 204, and a result output part 205.

The model storage part 200 is implemented by the HDD 504 illustrated in Fig. 4. The image acquisition part 201, the object detection part 202, the segmentation part 203, the region correction part 204, and the result output part 205 are implemented by allowing one or programs, which are loaded into the RAM 503 from the HDD 504 illustrated in Fig. 4, to cause the CPU 501 to execute instructions.

A trained object detection model and a trained segmentation model are stored in the model storage part 200.

The object detection model is a machine learning model of performing instance segmentation. The object detection model is configured to, in response to an input of an image, output an object detection result in which objects included in an image are individually detected. The object detection result includes an individual-object segmentation result in which regions where objects are individually captured are recognized. As the object detection model of the present embodiment, as one example, Mask R-CNN is used. The object detection model is also referred to as the individual-object segmentation model.

The object detection model of the present embodiment has been trained to detect, from an input image, each of fibers captured in the image. The object detection model learns using training data in which a training label is assigned to an image that captures a sample surface where fibers are dispersed. The training label includes information indicating a range of regions capturing individual fibers and identification information identifying the fibers.

The segmentation model is a machine learning model of performing semantic segmentation. The segmentation model is configured to, in response to an input of an image, output a category segmentation result in which regions capturing desired objects within the image are recognized. As the segmentation model of the present embodiment, as one example, DeepLabv3 is used. The segmentation model is also referred to as the category segmentation model.

The segmentation model of the present embodiment has been trained to divide the input image into regions capturing the fibers and other regions. The segmentation model learns using training data in which a training label is assigned to an image capturing a metal surface where fibers are dispersed. The training label includes information indicating a range of regions in which fibers are captured.

The image acquisition part 201 receives the target image from the user terminal 30, thereby acquiring the target image. The image acquisition part 201 may acquire the target image from the image acquiring device 10 in response to a request from the user terminal 30.

The object detection part 202 detects each of fibers in the target image acquired by the image acquisition part 201 using the trained object detection model read from the model storage part 200, thereby generating an object detection result corresponding to each of the fibers in the target image.

The segmentation part 203 recognizes regions capturing the fibers (may be referred to as "fiber regions" hereinafter) acquired by the image acquisition part 201 using the trained segmentation model read from the model storage part 200, thereby generating a segmentation result indicating the fiber regions.

The region correction part 204 corrects the regions in which the fibers are detected (may be referred to as "fiber detection regions" hereinafter) in the object detection result generated by the object detection part 202. The region correction part 204 may correct the fiber detection regions, for example, by merging the object detection result generated by the object detection part 202 with the segmentation result generated by the segmentation part 203. The region correction part 204 may correct the fiber detection regions through dilation or smoothing, followed by merging with the segmentation result generated by the segmentation part 203 to thereby correct the fiber detection regions.

The result output part 205 transmits an output image indicating the correction result from the region correction part 204 to the user terminal 30.

### <<Functional configuration of user terminal 30>>

As illustrated in Fig. 5, the user terminal 30 of the present embodiment includes an image transmission part 301 and a result display part 302.

The image transmission part 301 and the result display part 302 are implemented by allowing one or programs, which are loaded into the RAM 503 from the HDD 504 illustrated in Fig. 4, to cause the CPU 501 to execute instructions.

The image transmission part 301 acquires a target image from the image acquiring device 10 in response to an operation of a user. The image transmission part 301 transmits the target image acquired from the image acquiring device 10 to the image processing device 20.

The result display part 302 receives the output image from the image processing device 20. The result display part 302 displays the received output image on the display device 506.

### <Process flow of object detection system>

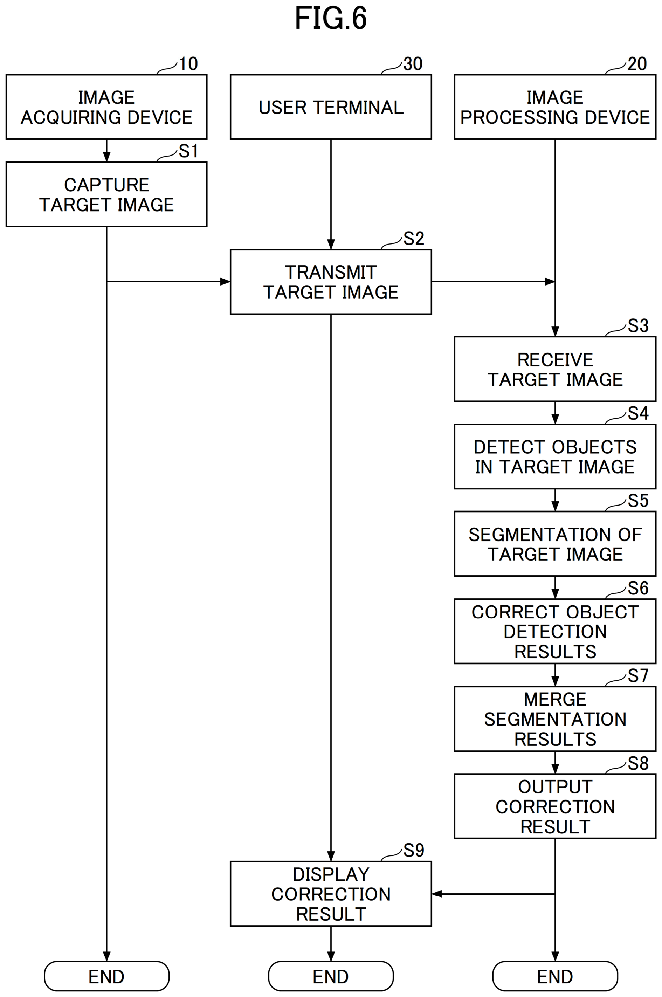

A process flow of an image processing method performed by the object detection system 1 of the present embodiment will be described with reference to Figs. 6 to 11. Fig. 6 is a flowchart illustrating one example of the process flow of the image processing method of the present embodiment.

At step S1, the imaging control part 101 of the image acquiring device 10 adjusts a view angle of a camera so that fibers are captured, thereby capturing a target image. Next, the imaging control part 101 stores the captured target image in the image storage part 102.

At step S2, the image transmission part 301 of the user terminal 30 transmits a request for acquiring the target image to the image acquiring device 10 in response to an operation of a user. In response to the acquisition request received from the user terminal 30, the image acquiring device 10 reads the target image stored in the image storage part 102 and transmits the read target image to the user terminal 30. The image transmission part 301 transmits the target image received from the image acquiring device 10 to the image processing device 20.

At step S3, the image acquisition part 201 of the image processing device 20 receives the target image from the user terminal 30. Next, the image acquisition part 201 transmits the received target image to the object detection part 202 and the segmentation part 203.

At step S4, the object detection part 202 of the image processing device 20 receives the target image from the image acquisition part 201. Next, the object detection part 202 reads the trained object detection model from the model storage part 200.

Subsequently, the object detection part 202 inputs the target image to the trained object detection model. The object detection model detects each of fibers in the target image, and outputs an object detection result of the target image. Thus, the object detection part 202 acquires the object detection result of the target image. Then, the object detection part 202 transmits the object detection result to the region correction part 204.

The object detection result of the target image includes detection results respectively corresponding to the fibers detected in the target image, and reliability of the object detection results. Each detection result of each fiber includes a mask score indicating a fiber detection region and a score indicating objectness. Moreover, each detection result of each fiber may include information indicating a mask obtained by binarizing the mask score with a threshold, and a bounding box.

The object detection part 202 may discard the detection results, in which the score indicating the objectness (0 or greater and 1 or less) is equal to or lower than a predetermined threshold, among the detection results respectively corresponding to the fibers. The threshold may be arbitrarily determined. For example, the threshold can be set at 0.3.

At step S5, the segmentation part 203 of the image processing device 20 receives the target image from the image acquisition part 201. Next, the segmentation part 203 reads the trained segmentation model from the model storage part 200.

Subsequently, the segmentation part 203 inputs the target image to the trained segmentation model. The segmentation model recognizes fiber regions in the target image, and outputs a segmentation result of the target image. Thus, the segmentation part 203 acquires the segmentation result of the target image. Then, the segmentation part 203 transmits the segmentation result to the region correction part 204.

The segmentation result of the target image includes a semantic score indicating each of the fiber regions, and reliability of the segmentation result.

At step S6, the region correction part 204 of the image processing device 20 receives the object detection result from the object detection part 202. Moreover, the region correction part 204 receives the segmentation result from the segmentation part 203. Next, the region correction part 204 corrects the object detection result based on the segmentation result.

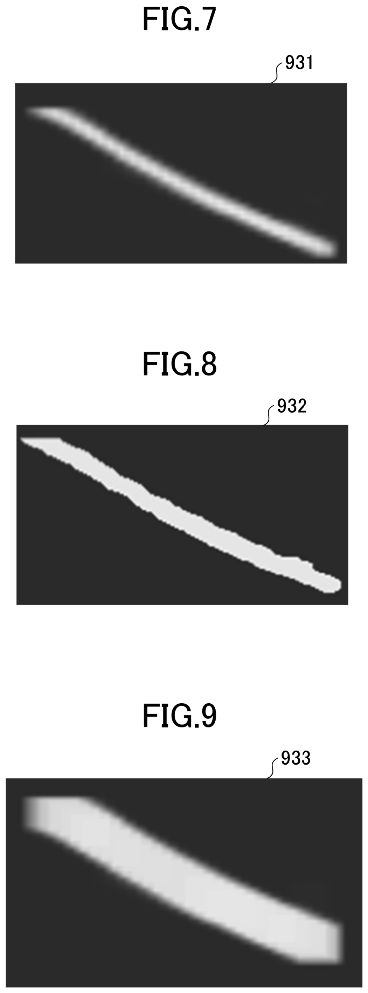

For example, the region correction part 204 expands the fiber detection regions through dilation or smoothing to thereby correct the object detection result. One example of a process of correcting the fiber detection region through dilation will be described with reference to Figs. 7 to 10 hereinafter.

Fig. 7 is a view illustrating one example of a mask score before dilation. As illustrated in Fig. 7, the mask score 931 before dilation indicates a fiber detection region in which one fiber is detected. It is understood that the mask score 931 illustrated in FIG. 7 is discontinuous at both ends and the peripheral portion is not clear.

First, the region correction part 204 performs thresholding of the mask score 931 to binarize the mask score 931. Fig. 8 is a view illustrating one example of the mask score after binarization. As illustrated in Fig. 8, the mask score 932 after binarization is binarized so that the fiber detection region is to be 1 and the other region is to be 0. It is understood that the peripheral portion of the fiber is clear in the mask score 932 after binarization.

Note that the mask score after binarization may be a mask score output by the object detection model.

Next, the region correction part 204 performs dilation on the mask score. Thus, the fiber detection region is expanded. Fig. 9 is a view illustrating one example of the mask score after dilation. As illustrated in Fig. 9, it is understood that the entire fiber detection region is expanded in the mask score 933 after dilation compared with the mask score 931 before dilation illustrated in Fig. 7.

The above-described dilation may be also performed by setting a size of a bounding box to be large, or setting a low score threshold.

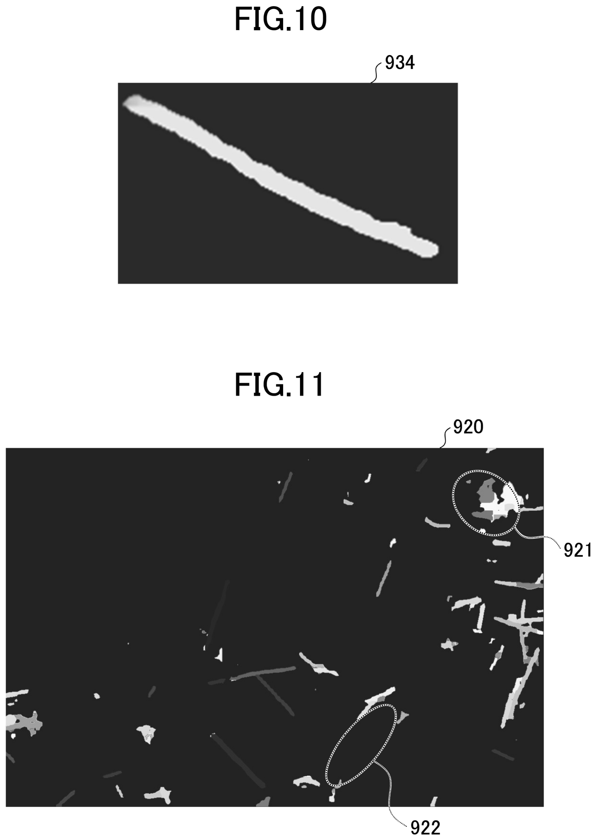

Then, the region correction part 204 generates a mask score after correction based on the mask score 932 after binarization and the mask score 933 after dilation. Specifically, the region correction part 204 applies the mask score 932 after binarization to the inside of a region of interest (ROI) and applies the mask score 933 after dilation to the outside of the ROI. Fig. 10 is a view illustrating one example of the mask score after correction. As illustrated in Fig. 10, it is understood that the both ends and peripheral portion of the fiber are clear in the mask score 934 after correction, and an outline of the fiber is accurately detected.

The description will be made referring back to Fig. 6. At step S7, the region correction part 204 of the image processing device 20 merges the segmentation result and the object detection result after correction. Thus, the region correction part 204 acquires a correction result of the object detection result. Then, the region correction part 204 transmits the correction result of the object detection result to the result output part 205.

For example, the region correction part 204 may merge the segmentation result and the object detection result after the correction through calculation of a logical conjunction of the object detection result and the segmentation result. In this case, the region correction part 204 calculates a logical conjunction of the segmentation result with the object detection result of each of the fibers. Thus, the detection results respectively corresponding to the fibers (may be also referred to as "individual detection results" hereinafter) are generated.

Moreover, the region correction part 204 may merge the segmentation result with the object detection result after correction, for example, by selecting the object detection result or the segmentation result based on a result of comparing a score of the object detection result and a score of the segmentation result for each of pixels of the target image. In this case, the region correction part 204 compares the semantic score of the segmentation result with each of the mask scores of the object detection result respectively corresponding to the fibers for each of the pixels of the target image, and selects a result with the higher score, if the scores are different, or selects a result with the higher reliability, if the scores are the same. Thus, individual detection results respectively corresponding to the fibers are generated.

In the case where, among the individual detection results respectively corresponding to the fibers, an area of an individual detection result corresponding to one fiber overlapping an individual detection result corresponding to another fiber is equal to or greater than a predetermined threshold, the region correction part 204 may discard the individual detection result with the lower mask score. This is because the detection results having a large overlapping area are considered to be the detection results of the same fiber. The threshold may be arbitrarily determined. For example, the threshold may be set at 0.7 (specifically, in the case where 70% of the area is overlapped, such a detection result is discarded).

Then, the region correction part 204 overlaps the individual detection results respectively corresponding to the fibers from the top in descending order of the score of the objectness, thereby generating a correction result. Finally, the region correction part 204 adds a region that is not indicated as the fiber detection region in the object detection result, among the fiber regions indicated in the segmentation result, to the correction result as the fiber region.

Note that the region correction part 204 may calculate the number and distribution of fiber lengths and fiber diameters, and statistical values such as an average value, a median value, and a standard deviation, for the fiber regions included in the correction result.

Fig. 11 is a view illustrating one example of the detection result of the present embodiment. Fig. 11 illustrates a result in which the fibers are detected in the target image illustrated in Fig. 1 by the image processing device 20. As presented in Fig. 11, the region 921 capturing the fibers entangled with one another is detected as fibers entangled with other fibers in the detection result 920 of the present embodiment. Moreover, the region 922 capturing a streak that is not a fiber is not detected as a fiber.

The description will be made referring back to Fig. 6. At step S8, the result output part 205 of the image processing device 20 receives the correction result from the region correction part 204. Next, the result output part 205 generates an output image indicating the detection result of the fibers captured in the target image based on the correction result. Then, the result output part 205 transmits the output image to the user terminal 30.

The output image may be a mask image in which classification information for classifying detected fibers is set for each pixel. The output image may be an image in which classification information for classifying each of the regions of the detected fibers and each of the fibers is annotated in the target image. The output image may be an image indicating a probability value of each of the detected fibers.

At step S9, the result display part 302 of the user terminal 30 receives the output image from the image processing device 20. Then, the result display part 302 displays the received output image on the display device 506. The result display part 302 may display the above-described statistical values or the like calculated for each fiber region in response to a request from a user.

### <User interface of object detection system>

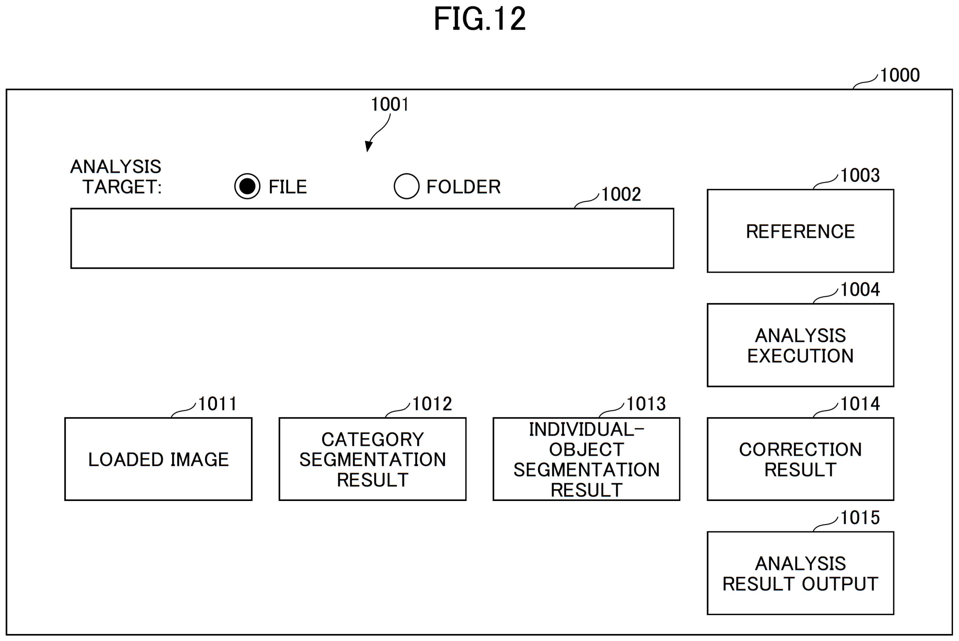

The user interface of the object detection system 1 of the present embodiment will be described with reference to Figs. 12 to 18.

### <<Analysis screen>>

Fig. 12 is a view illustrating one example of an analysis screen. The analysis screen is a screen for inputting a target image that is an analysis target, and performing object detection on the target image.

As illustrated in Fig. 12, the analysis screen 1000 includes a target selection column 1001, a target input column 1002, a reference button 1003, an analysis execution button 1004, four check buttons 1011 to 1014, and an output button 1015.

In an initial display, the target selection column 1001, the target input column 1002, and the reference button 1003 are controlled so that the target selection column 1001, the target input column 1002, and the reference button 1003 can be pressed or receive an input. On the other hand, in the initial display, the analysis execution button 1004, the check buttons 1011 to 1014, and the output button 1015 are controlled so that the analysis execution button 1004, the check buttons 1011 to 1014, and the output button 1015 cannot be pressed.

The target selection column 1001 is an input column for designating a selection method of a target image. In the example of Fig. 12, a file or a folder is selectable as an option of an analysis target. In the case where a file is selected, one file to be a target image can be selected. In the case where a folder is selected, all the files stored in the designated folder can be selected as target images.

The target input column 1002 is an input column for designating a location of the target image. In the case where the file is selected in the target selection column 1001, information indicating the location of the file is input to the target input column 1002. In the case where the folder is selected in the target selection column 1001, information indicating the location of the folder is input to the target input column 1002. The information indicating the location of the file or the folder is, for example, a local path of the file or folder, a uniform resource locator (URL) of the file or folder, or the like.

As the reference button 1003 is pressed, a file selection dialog is displayed. As a file or folder is selected in the file selection dialog, information indicating a location of the file or folder is input to the target input column 1002. As the information indicating the location of the file or folder is input to the target input column 1002, the analysis execution button 1004 is controlled so that the analysis execution button 1004 can be pressed.

The analysis execution button 1004 is a button for executing object detection on the target image. The target image is the file input to the target input column 1002, or the file stored in the folder input to the target input column 1002. As the object detection on the target image is completed, the check buttons 1011 to 1014 and the output button 1015 are controlled so that the check buttons 1011 to 1014 and the output button 1015 can be pressed.

As the check button 1011 is pressed, the image-check screen for displaying the target image is displayed. As the check button 1012 is pressed, a first result-check screen for displaying the category segmentation result is displayed. As the check button 1013 is pressed, a second result-check screen for displaying the individual-object segmentation result is displayed. As the check button 1014 is pressed, a correction-result-check screen for displaying the correction result is displayed. As the output button 1015 is pressed, electronic data indicating an analysis result of the target image is stored.

### <<Image-check screen>>

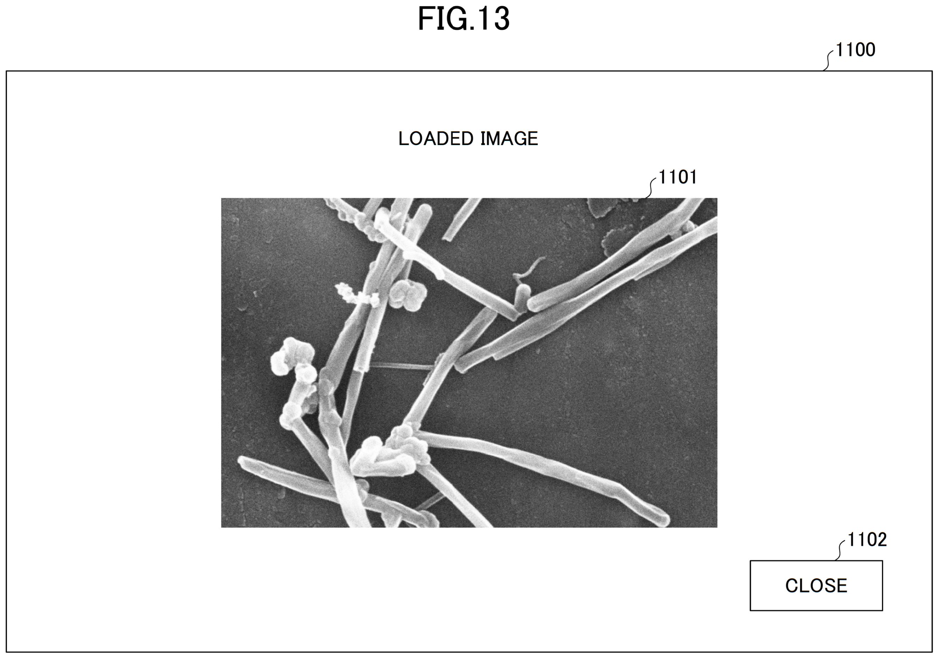

Fig. 13 is a view illustrating one example of an image-check screen. As illustrated in Fig. 13, the image-check screen 1100 includes an image display column 1101 and an end button 1102.

The image display column 1101 displays a target image. As the end button 1102 marked as "close" is pressed, the image-check screen 1100 is ended, and the analysis screen 1000 is displayed.

### <<First result-check screen>>

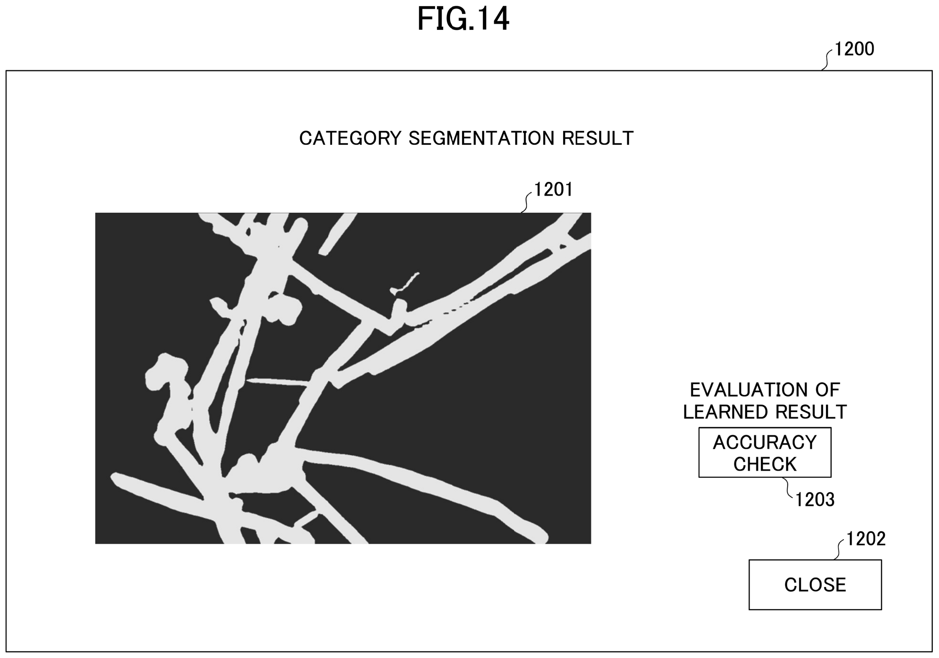

Fig. 14 is a view illustrating a first example of a first result-check screen. As illustrated in Fig. 14, the first result-check screen 1200 includes an image display column 1201, an end button 1202, and a check button 1203.

The image display column 1201 displays a category segmentation result of the target image. As the end button 1202 marked as "close" is pressed, the first result-check screen 1200 is ended, and the analysis screen 1000 is displayed. As the check button 1203 marked as "accuracy check" is pressed, a score indicating recognition accuracy of each object is displayed in the image display column 1201.

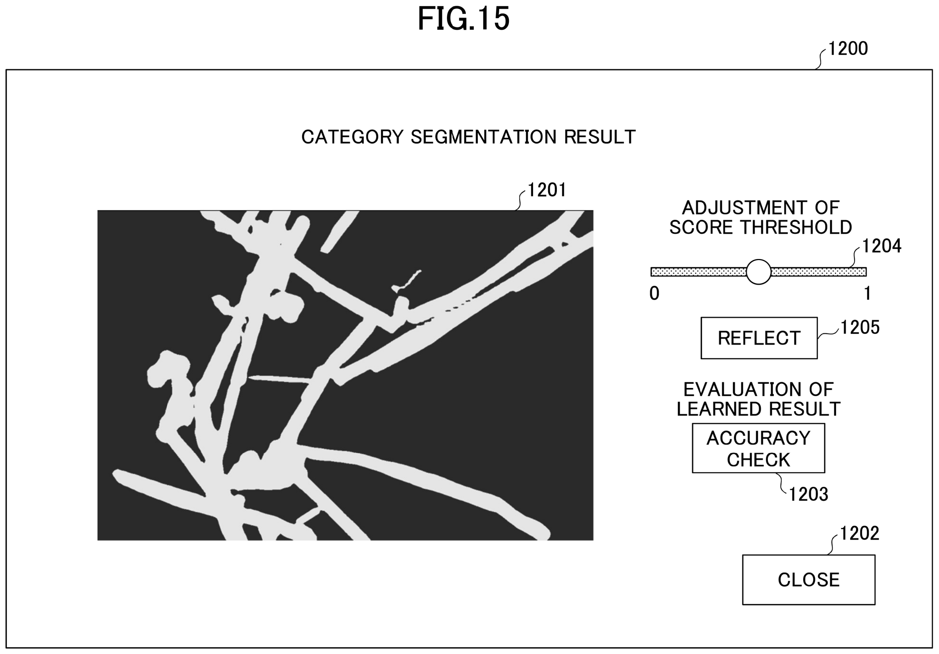

Fig. 15 is a view illustrating a second example of the first result-check screen. The second example of the first result-check screen 1200 further includes a threshold setting column 1204 and a reflection button 1205, as compared with Fig. 14 illustrating the first example of the above-described first result-check screen.

The threshold setting column 1204 is an input column for setting a threshold used for binarizing a semantic score. As the reflection button 1205 is pressed, an image obtained by binarizing the semantic score based on the threshold set by the threshold setting column 1204 is displayed in the image display column 1201.

Note that, the threshold set by operating the threshold setting column 1204 and the reflection button 1205 is used only for checking the detection result in the analysis screen 1000. Accordingly, the set threshold is not continuously used in the object detection system 1.

### <<Second result-check screen>>

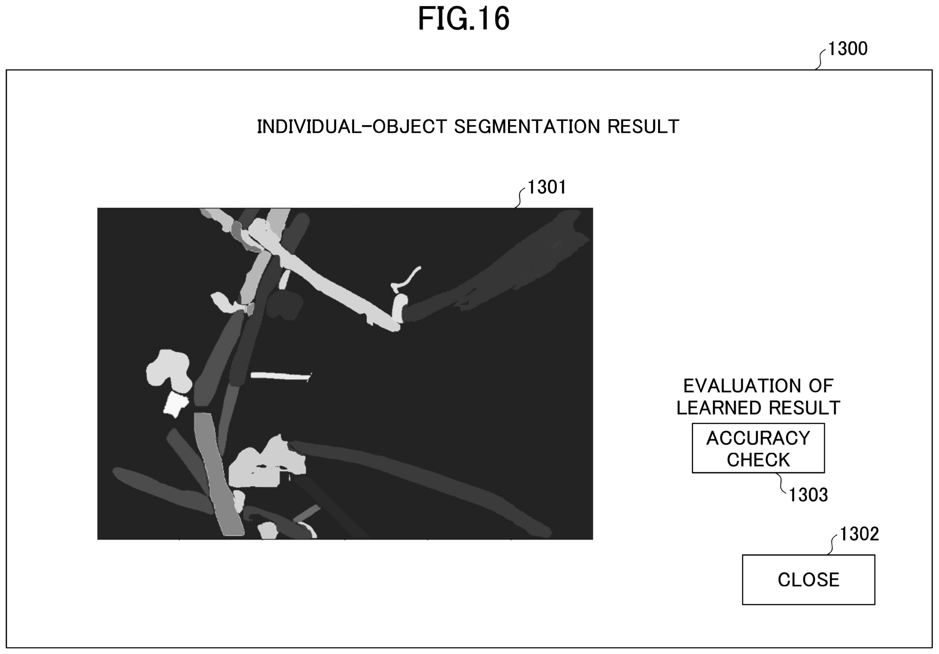

Fig. 16 is a view illustrating a first example of a second result-check screen. As illustrated in Fig. 16, the second result-check screen 1300 includes an image display column 1301, an end button 1302, and a check button 1303.

The image display column 1301 displays an individual-object segmentation result of the target image. As the end button 1302 marked as "close" is pressed, the second result-check screen 1300 is ended, and the analysis screen 1000 is displayed. As the check button 1303 marked as "accuracy check" is pressed, a score indicating recognition accuracy of each object is displayed in the image display column 1301.

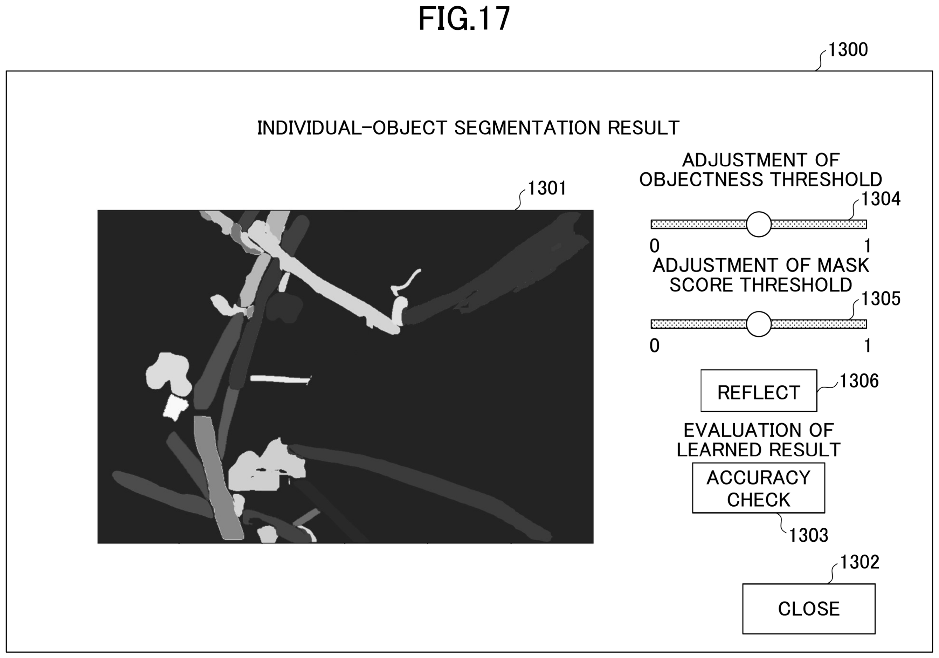

Fig. 17 is a view illustrating a second example of the second result-check screen. The second example of the second result-check screen 1300 further includes a first threshold setting column 1304, a second threshold setting column 1305, and a reflection button 1306, as compared with Fig. 16 illustrating the first example of the above-described second result-check screen.

The first threshold setting column 1304 is an input column for setting a threshold for a score indicating objectness. The second threshold setting column 1305 is an input column for setting a threshold used for binarizing a mask score. As the reflection button 1306 is pressed, the detection result with a low score of objectness is discarded based on the thresholds set in the first threshold setting column 1304 and the second threshold setting column 1305, and an image obtained by binarizing the mask score is displayed in the image display column 1301.

Note that the thresholds set by operating the first threshold setting column 1304, the second threshold setting column 1305, and the reflection button 1306 are used only for checking the detection result in the analysis screen 1000. Accordingly, the set thresholds are not continuously used in the object detection system 1.

### <<Correction-result-check screen>>

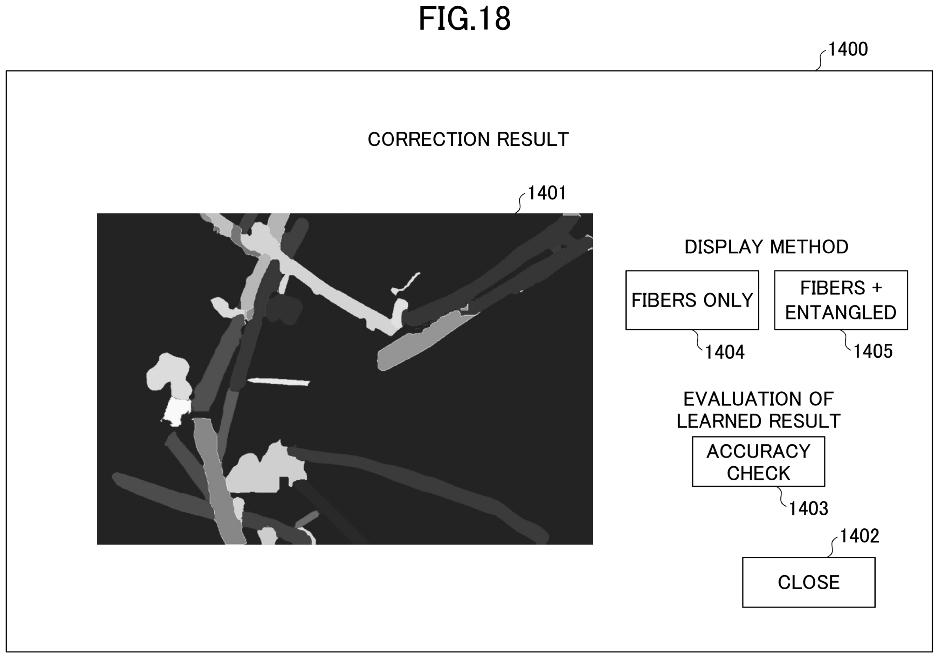

Fig. 18 is a view illustrating one example of a correction-result-check screen. As illustrated in Fig. 18, the correction-result-check screen 1400 includes an image display column 1401, an end button 1402, a check button 1403, a fiber display button 1404, and a entangled display button 1405.

The image display column 1401 displays a correction result of the individual-object segmentation result. As the end button 1402 marked as "close" is pressed, the correction-result-check screen 1400 is ended and the analysis screen 1000 is displayed. As the check button 1403 marked as "accuracy check" is pressed, a score indicating recognition accuracy of each object is displayed in the image display column 1401.

As the fiber display button 1404 marked as "fibers only" is pressed, among the fibers detected in the target image, the detection result from which the fibers entangled with one another are removed is displayed in the image display column 1401. As the entangled display button 1405 marked as "fibers + entangled" is pressed, among the fibers detected in the target image, the detection result including the fibers entangled with one another is displayed in the image display column 1401.

### <Comparison between U-Net and DeepLab>

As a machine learning model that performs the semantic segmentation, for example, U-Net, DeepLab, or the like is used. In the present embodiment, both U-Net and DeepLab can be used as the segmentation model. However, when DeepLabv3 is employed as the segmentation model, probability of improving accuracy is increased. A reason thereof will be described hereinafter.

U-Net performs upsampling multiple times in an encoder and the same number of downsampling in a decoder to extract global features of an input image. In the upsampling in the encoder, a convolution process which is normally used in a convolutional neural network is performed.

On the other hand, DeepLabv3 is configured to set a large kernel size by dilated convolution to minimize an amount of calculation while extracting global features of an input image. Note that the dilated convolution is a convolution process of reducing the number of parameters by setting part of kernels at 0, while setting a large kernel for convolution.

As described above, DeepLabv3 can incorporate more global features by utilizing dilated convolution. As a result, DeepLabv3 can more efficiently incorporate global features compared to U-Net, and thus improvement in accuracy of localization of regions can be expected.

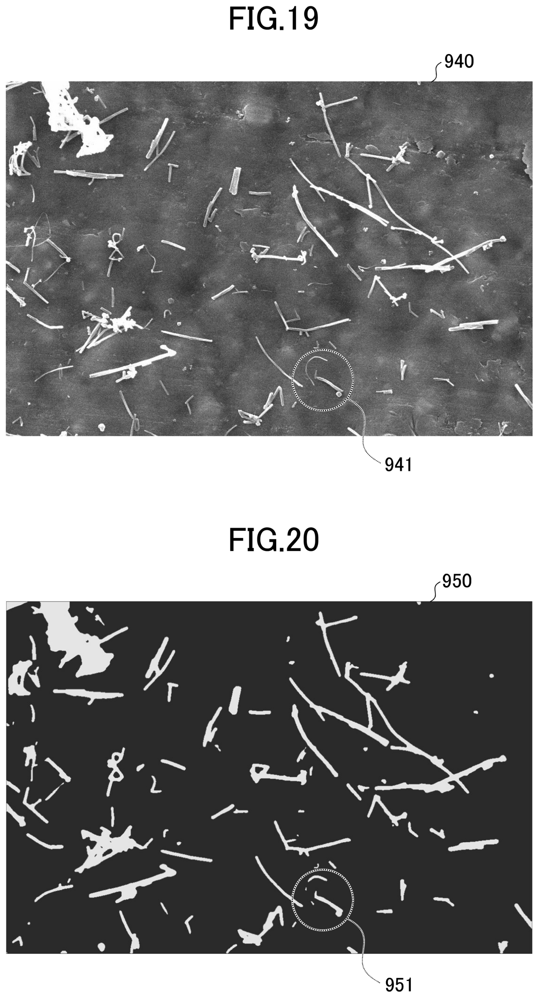

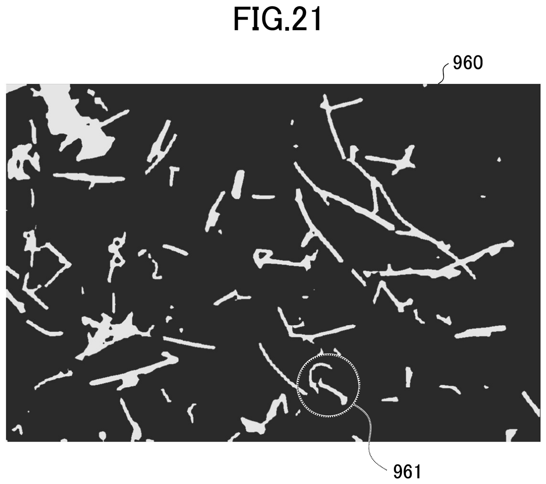

A comparison result between U-Net and DeepLabv3 will be described with reference to Figs. 19 to 21. Fig. 19 is a view illustrating one example of a target image used for comparison. Fig. 20 is a view illustrating one example of a segmentation result by U-Net. Fig. 21 is a view illustrating one example of the segmentation result by DeepLabv3.

As illustrated in Fig. 19, the target image 940 used for comparison is an image capturing a state in which a large number of fibers are dispersed. As illustrated in Fig. 20, there are fibers that are not accurately recognized in the segmentation result 950 by U-Net. For example, there is a region 941 including relatively thick fibers and relatively thin fibers in the target image 940. It can be understood that relatively thin fibers are discontinued and are not accurately recognized in the region 951 of the segmentation result 950 by U-Net, which corresponds to the region 941 of the target image 940.

On the other hand, as illustrated in Fig. 21, recognition accuracy of the fibers captured in the target image 940 is improved in the segmentation result 960 by DeepLabv3 compared to U-Net. For example, it is understood that all of the fibers are accurately recognized in the region 961 of the segmentation results 960 by DeepLabv3, which corresponds to the region 941 of the target image 940.

### <Effects of embodiment>

The image processing device 20 of the present embodiment corrects a segmentation result obtained by an individual-object segmentation model with a segmentation result obtained by a category segmentation model. The individual-object segmentation model can identify a region of each of objects included in an image, and the category segmentation model can highly accurately recognize an outline of each of the objects captured in the image. Therefore, each of fibers whose outlines are highly accurately recognized can be detected by correcting the individual-object segmentation result with the category segmentation result. Accordingly, the image processing device 20 of the present embodiment can accurately recognize fibers included in an image.

The image processing device 20 of the present embodiment is considered to be particularly effectively used when appropriately evaluating a fiber material under the RoHS directive or the REACH regulation.

The image processing device 20 of the present embodiment expands regions where fibers are detected in the individual-object segmentation result. Although the individual-object segmentation model tends to decrease detection accuracy in a peripheral portion of a detected object, the peripheral portion of the object can be complemented with the outline of the object highly accurately recognized by the category segmentation model, if the individual-object segmentation result is expanded to the outside of the peripheral portion of the object. Accordingly, the image processing device 20 of the present embodiment can accurately recognize a peripheral portion of a fiber, an entangled portion of multiple fibers, or the like.

The image processing device 20 of the present embodiment calculates a logical conjunction of the individual-object segmentation result and the category segmentation result. Specifically, the fibers recognized in both the individual-object segmentation result and the category segmentation result are included in the correction result. Accordingly, the image processing device 20 of the present embodiment can reduce a possibility of erroneous detection of a dirt or the like in the background, which is not meant to be detected.

The image processing device 20 of the present embodiment selects the individual-object segmentation result or the category segmentation result for each of pixels of the target image based on a result of comparing a score of the individual-object segmentation result and a score of the category segmentation result. Specifically, the result with the higher score between the individual-object segmentation result and the category segmentation result can be included in the correction result. Accordingly, the image processing device 20 of the present embodiment can reduce a possibility of erroneous detection of dirt or the like on the background, which is not meant to be detected.

Although image analysis performed on fibers as a target has been described in the present embodiment, the image analysis can be similarly performed on particles as a target. For example, particles can be accurately recognized even in the case where particles overlap one another.

### [Additional notes]

Each of the functions of the embodiments described above can be implemented by one or more processing circuits. In the present specification, the term "processing circuit" includes a processor that has been programed to implement each of the above functions using software, such as a processor implemented by an electronic circuit, or an application specific integrated circuit (ASIC), a digital signal processor (DSP), a field programmable gate array (FPGA), or a device available in the related art, such as a circuit module, which are designed to implement each of the above-described functions, and the like.

The embodiments of the present disclosure have been described above in detail, but the embodiments disclosed herein are illustrative and non-restrictive in all aspects. The embodiments may be modified and improved in various forms without departing from the scope and spirit of the appended claims. The matters described in the embodiments can be combined with one another within a range that does not cause inconsistency with each other.

This application claims priority to Japanese Patent Application No. 2023-50607 filed before the Japan Patent Office on March 27, 2023, the entire contents of which are incorporated herein by reference.

### DESCRIPTION OF REFERENCE NUMERALS

1 object detection system
10 image acquiring device
101 imaging control part
102 image storage part
20 image processing device
200 model storage part
201 image acquisition part
202 object detection part
203 segmentation part
204 region correction part
205 result output part
30 user terminal
301 image transmission part
302 result display part

## Claims

1. An image processing device, comprising:
an image acquisition part configured to acquire a target image in which fibers are captured;
a first segmentation part configured to generate an individual-object segmentation result in which each of the fibers included in the target image is detected using a trained individual-object segmentation model;
a second segmentation part configured to generate a category segmentation result in which regions where the fibers are captured are recognized in the target image using a trained category segmentation model;
a region correction part configured to correct the individual-object segmentation result with the category segmentation result; and
a result output part configured to output a correction result of the individual-object segmentation result.

2. The image processing device according to claim 1,
wherein the region correction part is configured to calculate a logical conjunction of the individual-object segmentation result and the category segmentation result to generate the correction result.

3. The image processing device according to claim 1,
wherein the region correction part is configured to select the individual-object segmentation result or the category segmentation result for each unit of the target image based on a result of a comparison between a score of the individual-object segmentation result and a score of the category segmentation result to generate the correction result.

4. The image processing device according to any one of claims 1 to 3,
wherein the individual-object segmentation model is a model of performing instance segmentation, and
the category segmentation model is a model of performing semantic segmentation.

5. The image processing device according to claim 4,
wherein the individual-object segmentation model is Mask R-CNN or YOLACT.

6. The image processing device according to claim 4 or 5,
wherein the individual-object segmentation model allows a size of a bounding box to be adjustable.

7. The image processing device according to any one of claims 4 to 6,
wherein the individual-object segmentation model allows a size of a mask of each individual object to be adjustable.

8. The image processing device according to any one of claims 4 to 7,
wherein the category segmentation model is DeepLab or U-Net.

9. The image processing device according to any one of claims 1 to 8,
wherein the region correction part is configured to correct regions where the fibers are detected in the individual-object segmentation result.

10. The image processing device according to claim 9,
wherein the region correction part is configured to expand a region segmented per individual object through dilation or smoothing.

11. An image processing method comprising:
causing a computer to perform:
a process of acquiring a target image in which fibers are captured;
a process of generating an individual-object segmentation result in which each of the fibers included in the target image is detected using a trained individual-object segmentation model;
a process of generating a category segmentation result in which regions where the fibers are captured are recognized in the target image using a trained category segmentation model;
a process of correcting the individual-object segmentation result with the category segmentation result; and
a process of outputting a correction result of the individual-object segmentation result.

12. A program for causing a computer to perform:
a process of acquiring a target image in which fibers are captured;
a process of generating an individual-object segmentation result in which each of the fibers included in the target image is detected using a trained individual-object segmentation model;
a process of generating a category segmentation result in which regions where the fibers are captured are recognized in the target image using a trained category segmentation model;
a process of correcting the individual-object segmentation result with the category segmentation result; and
a process of outputting a correction result of the individual-object segmentation result.
